# EUROPEAN PATENT SPECIFICATION

(11) **EP 2 184 395 B1**
(45) Date of publication and mention of the grant of the patent: **03.04.2019**
(21) Application number: 09167266.7
(22) Date of filing: 05.08.2009
(51) Int. Cl.: D06F 39/14

(54) **Door of washing machine**
Waschmaschinentür
Porte de machine à laver

(30) Priority: 10.11.2008 KR 20080110754
(43) Date of publication of application: 12.05.2010
(73) Proprietor: Samsung Electronics Co., Ltd., Suwon-si, Gyeonggi-do, 443-742 (KR)
(72) Inventor: Lee, Sang Bin, Gyeonggi-do (KR)
(74) Representative: Grünecker Patent- und Rechtsanwälte PartG mbB

(56) References cited:
- EP-A1- 1 564 323
- EP-A2- 1 486 604
- WO-A1-2008/086934
- KR-A- 20070 070 780
- US-A1- 2001 044 988
- US-A1- 2004 177 656

## Description

### BACKGROUND

### 1. Field

Embodiments of the present disclosure relate to a door, which opens and closes a main body of a washing machine, and an assembling structure and assembling method thereof.

### 2. Description of the Related Art

In general, washing machines are apparatuses, which remove dirt or contaminants from laundry through chemical decomposition and mechanical impact. Among these washing machines, a drum washing machine has an increased washing capacity as well as a reduced total height and scarcely generates problems, such as the entanglement of laundry, compared with a pulsator washing machine, in which an inner tub, i.e., a drum, is rotated while facing upward, thus being increasingly in great demand.

In such a drum washing machine, an opening, through which the laundry is put into the washing machine, is formed through the front surface of the main body, and a door to open and close the opening is rotatably installed at one side of the front surface of the main body.

The door includes a front panel and a rear panel forming the external appearance of the door, a door handle disposed between the front panel and the rear panel to allow a user to grip the door handle, and a door opening and closing device to open and close the door in connection with the operation of the door handle.

In the washing machine, when the user applies pressure to the door handle, the door opening and closing device is operated in connection with the door handle due to the application of pressure, and when the pressure applied to the door handle is released, the door handle and the door opening and closing device are returned to their original states.

In order to return the door handle and the door opening and closing device to their original states when the pressure applied to the door handle is released, as described above, the door opening and closing device includes an elastic member.

In a conventional assembling method of a door of a washing machine as described for example in KR-A-10 2007 0070780, the door is assembled by fixing one side of an elastic member to a door handle and fixing the other side of the elastic member to the rear surface of a front panel by pressure when the front panel is assembled with a rear panel.

However, the above conventional assembling method may cause mis-assembly between the elastic member and the front panel when the door is assembled, and when the elastic member and the front panel are mis-assembled, the door handle may move.

Further, an assembly time required to accurately assemble the front panel and the elastic member is increased, and thereby productivity of the washing machine is lowered and price competitiveness of the washing machine is deteriorated.

US 2004/01177656 A1 discloses a hook assembly for a door of a washing machine. One end of an elastic member is connected to such hook and the other end of the elastic member is connected to a grip. This means, that the grip is moved by user to compress or extend the elastic member and that the corresponding force will then be transmitted to turn the hook. Consequently, the elastic member is arranged between the hook and the grip.

### SUMMARY

It is an object of the present invention to provide a door of a washing machine, in which assembly efficiency of the door is improved.

This object is solved by the features of claim 1.

Advantageous embodiments are disclosed by the sub-claims.

Additional aspects and/or advantages will be set forth in part in the description which follows and, in part, will be apparent from the description, or may be learned by practice of the embodiments.

### BRIEF DESCRIPTION OF THE DRAWINGS

These and/or other aspects of the disclosure will become apparent and more readily appreciated from the following description of the embodiments, taken in conjunction with the accompanying drawings in which:
FIG. 1 is a perspective view illustrating a washing machine in accordance with one embodiment of the present disclosure in a state in which a door is opened;
FIG. 2 is an exploded perspective view of the door of the washing machine in accordance with the embodiment of the present disclosure;
FIGS. 3 and 4 are views illustrating a process of assembling a door handle and a door opening and closing device of the door in accordance with the embodiment of the present disclosure;
FIG. 5 is a view illustrating an assembling operation of a front panel of the door of the washing machine in accordance with the embodiment of the present disclosure;
FIG. 6 is a view illustrating an assembling operation of a door handle and a door opening and closing device of a door of a washing machine in accordance with another embodiment of the present disclosure; and
FIG. 7 is an assembled perspective view of an essential portion of the door in accordance with the other embodiment of the present disclosure.

### DETAILED DESCRIPTION

Reference will now be made in detail to embodiments of the present disclosure, examples of which are illustrated in the accompanying drawings, wherein like reference numerals refer to like elements throughout.

Hereinafter, with reference to the accompanying drawings, a door of a washing machine in accordance with one embodiment of the present disclosure and an assembling structure and assembling method thereof will be described.

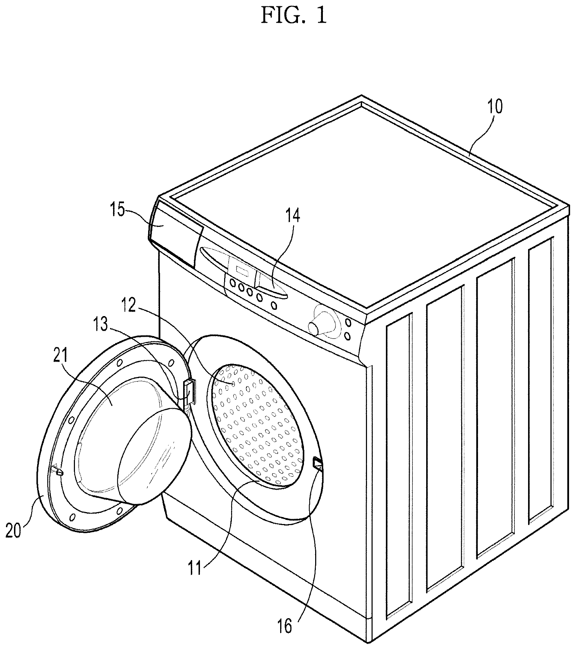

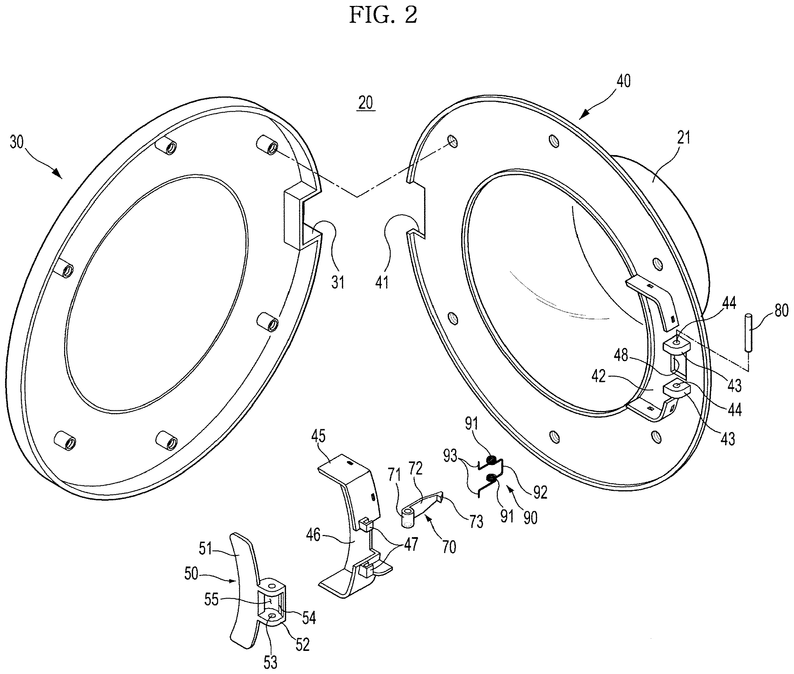

FIG. 1 is a perspective view illustrating the washing machine in accordance with one embodiment of the present disclosure in a state in which the door is opened, and FIG. 2 is an exploded perspective view of the door of the washing machine in accordance with the embodiment of the present disclosure.

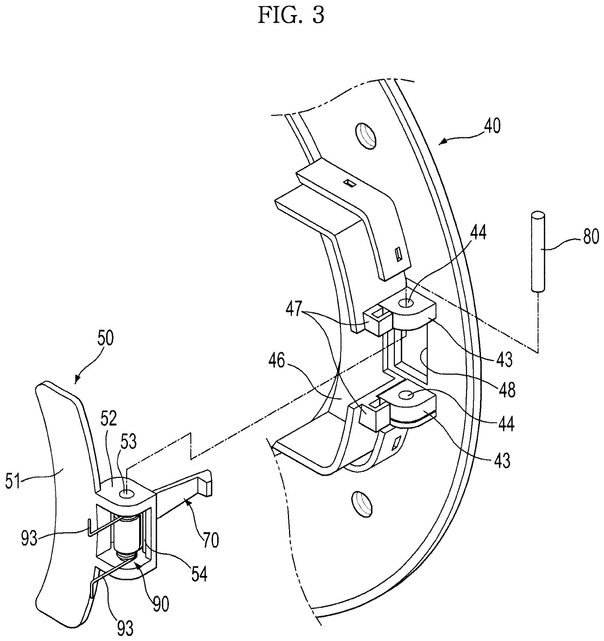

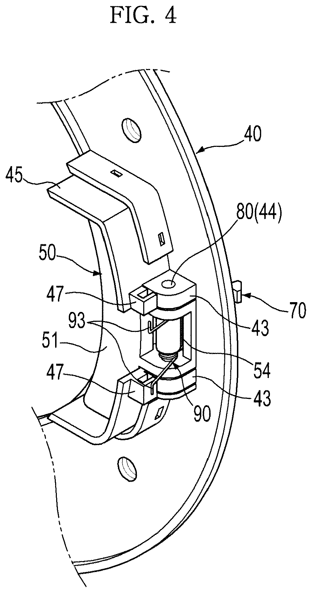

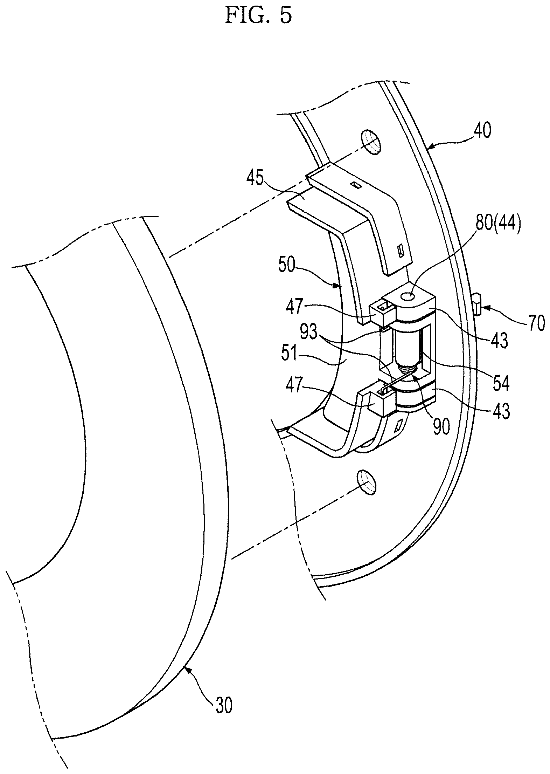

FIGS. 3 and 4 are views illustrating a process of assembling a door handle and a door opening and closing device of the door in accordance with the embodiment of the present disclosure, and FIG. 5 is a view illustrating an assembling operation of a front panel of the door of the washing machine in accordance with the embodiment of the present disclosure.

The washing machine in accordance with the present disclosure, as shown in FIG. 1, may include, for example, a main body 10 having an approximately box shape and provided with an opening 11 formed through the front surface of the main body 10 such that laundry is put into or taken out of the main body 10 through the opening 11, a tub (not shown) and a drum 12 installed in the main body 10 in the horizontal direction, and a door 20 to open and close the opening 11 of the main body 10.

The door 20 is rotatably connected to the main body 10 by a hinge member 13 installed at one side end of the door 20.

When the operation of the washing machine is stopped or completed, a user opens the door 20 so that laundry may be put into or taken out of the main body 10, and when the washing machine is operated, the user closes the door 20 such that washing of the laundry is carried out in the closed state of the opening 11.

A control panel 14 to control the washing machine is provided on the upper portion of the front surface of the main body 10, and a detergent box 15 is installed at one side of the control panel 14.

Further, a hook coupling part 16 having a designated size, which connects with or separates from a hook member 70 of a door opening and closing device, which will be described later, to or from the main body 10, is formed on the main body 10.

The door 20, as shown in FIGS. 2 to 5, includes a front panel 30 forming the external appearance of the front surface of the door 20, a rear panel 40 connected with the front panel 30, a door handle 50 provided at the other side end of the door 20 opposite from the hinge member 13 to facilitate the opening and closing of the door 20, and the door opening and closing device (not shown) to lock the door 20 with the main body 10 and release the locking of the door 20 with the main body 10 in connection with the operation of the door handle 50. The front panel 30 is formed in a ring shape, the central portion of which is open to form an orifice. A first hinge coupling part 31 is provided at one side end of the front panel 30 to connect the hinge member 13 to the door 20.

The shape of the rear panel 40 corresponds to the shape of the front panel 30 and forms the external appearance of the rear surface of the door 20. A second hinge coupling part 41 corresponds to the first hinge coupling part 31 to connect the hinge member 13 to the door 20. The second hinge coupling part 41 is provided at one side end of the rear panel 40, and a mounting part 42 is provided at the other side end of the rear panel 40 opposite the second hinge coupling part 41. The mounting part 42 is provided for mounting of the door handle 50.

A pair of support parts 43 to rotatably support the door handle 50 is provided on the mounting part 42, and a first pin hole 44, into which a pin member 80 is inserted, is formed through each of the support parts 43. The pin member 80 will be described in greater detail below.

The door handle 50 is provided between the front panel 30 and the rear panel 40 such that a user may easily grip the door handle 50 and apply pressure to the door handle 50.

The door handle 50 includes a grip part 51 to allow the user to grip the door handle 50, and a coupling part 52 extended from the grip part 51 to rotatably mount the door handle 50 on the rear panel 40.

The grip part 51 has a curved plate shape, which is elongated approximately in the lengthwise direction, so as not to be exposed from the inner circumferential surface of the door 20.

The coupling part 52 is extended outward from the center of the grip part 51, and a pair of second pin holes 53, into which the pin member 80 is inserted, is formed at a position of the coupling part 52 corresponding to the first pin holes 44 of the support parts 43.

Therefore, the door handle 50 is connected to the rear panel 40 so that the door handle 50 is rotated forward and backward, by disposing the coupling part 52 between the pair of the support parts 43 of the rear panel 40 while communicating the first and second pin holes 44 and 53 with each other and then inserting the pin member 80 into the first and second pin holes 44 and 53. A first fixing part 54, to fix a connection part 92 of an elastic member 90, which will be described later, is formed on the coupling part 52. A reception part 55, to receive a rotational center part 71 of a hook member 70, which will be described later, is formed between the pair of the second pin holes 53 formed at both sides of the coupling part 52.

The door 20 further includes a transparent member 21 connected to the inner circumferential surface of the rear panel 40 such that the inside of the drum 12 is seen from the outside. Here, the rear panel 40 further includes a holder member 45 to mount the transparent member 21 on the rear panel 40.

Although the holder member 45 may be formed integrally, e,.g., of one-piece construction with the rear panel 40, this embodiment illustrates that the holder member 45 is formed separately from the rear panel 40 and thus the rear panel 40 further includes the holder member 45 detachably mounted on the rear panel 40.

The holder member 45 is mounted on the rear panel 40 through hook coupling, and one side of the edge of the transparent member 21 is inserted into a separation space between the holder member 45 and the rear panel 40.

Further, a handle reception part 46, in which the door handle 50 is mounted, is formed on the holder member 45, and the door handle 50 is mounted on the rear panel 40 within the handle reception part 46 such that the door handle 50 is rotated forward and backward.

The door opening and closing device includes the hook member 70 operated in connection with the operation of the door handle 50, the pin member 80 to rotatably mount the hook member 70 and the door handle 50 on the rear panel 40, and the elastic member 90 to return the hook member 70 and the door handle 50 to their original positions when the force applied to the door handle 50 is removed.

The hook member 70 includes the rotational center part 71 connected with the pin member 80, a lever part 72 protruding from one side of the rotational center part 71 to receive the rotary force of the door handle 50, and a hook part 73 formed at the front end of the lever part 72 to lock the door 20 with the main body 10.

A lever hole 48 having a designated size, through which the lever part 72 may be protruded to the outside of the rear panel 40, is formed through the rear panel 40.

Further, the hook coupling part 16, into which the hook part 73 may be inserted, is formed on the main body 10 at a position corresponding to the hook part 73.

The elastic member 90, which returns the door handle 50 and the hook member 70 to their original positions when the force applied to the grip part 51 by a user is removed, is provided on the pin member 80 to connect the door handle 50 and the rear panel 40.

The elastic member 90 may include a variety of springs, such as a torsional spring, to which a torsional stress in the rotational direction to the axis line is applied. This embodiment exemplarily describes a double torsional spring with two symmetrical terminals.

The elastic member 90 includes a pair of coil parts 91, a connection part 92 formed at the inner parts of the coil parts 91 to connect the coil parts 91, and a pair of free terminals 93 formed at the outer ends of the coil parts 91 and protruding from the coil parts 91.

The pair of the coil parts 91 is formed such that the pin member 80 is inserted into the coil parts 91, and the connection part 92 connecting the coil parts 91 is inserted into the first fixing part 54 of the door handle 50, and the free terminals 93 are fixed to the holder member 45.

Second fixing parts 47 to fix the pair of the free terminals 93 of the elastic member 90 are provided on the holder member 45. The second fixing parts 47 are formed in a pair corresponding to the pair of the free terminals 93, and thus the free terminals 93 are respectively fixed to the corresponding second fixing parts 47.

After the free terminals 93 of the elastic member 90 are fixed to the second fixing parts 47, as described above, the front panel 30 is assembled with the rear panel 40.

Therefore, in this embodiment, both sides of the elastic member 90 are fixed prior to the assembly of the front panel 30 and the rear panel 40, and then the front panel 30 is assembled with the rear panel 40, thereby preventing mis-assembly between the elastic member 90 and the front panel 30 and shortening an assembly time, compared with the conventional method that one end of an elastic member is fixed to the rear surface of a front panel by pressure when the front panel is assembled with a rear panel, and thus being capable of improving productivity and reducing production costs.

Hereinafter, an assembling method of the door of the washing machine in accordance with this embodiment will be described with reference to the accompanying drawings.

As shown in FIGS. 2 and 3, the transparent member 21 is fixed to the rear panel 40, and then the holder member 45 is mounted on the rear panel 40.

Alternately, the holder member 45 may be mounted on the rear panel 40, and then the transparent member 21 may be interposed between the rear panel 40 and the holder member 45.

Thereafter, as shown in FIGS. 3 and 4, the connection part 92 of the elastic member 90 is fixed to the first fixing part 54 of the door handle 50, and the rotational center part 71 of the hook member 70 is located in a space between the pair of the coil parts 91 of the elastic member 90 so that the second pin holes 53 of the coupling part 52 of the door handle 50, the coil parts 91 of the elastic member 90, and the rotational center part 71 of the hook member 70 are communicated with one another.

Thereafter, the pin member 80 is inserted into the first pin holes 44 of the support parts 43 so that the pin member 80 passes through the second pin holes 53, the coil parts 91, and the rotational center part 71, communicated with the first pin holes 44, thereby rotatably connecting the door handle 50 and the hook member 70 between the support parts 43 of the rear panel 40.

Thereafter, as shown in FIGS. 4 and 5, the free terminals 93 at the other end of the elastic member 90 are fixed to the second fixing parts 47 of the holder member 45 by pressure, thereby completing the mounting of the elastic member 90 on the rear panel 40.

Thereafter, the front panel 30 is connected to the front surface of the rear panel 40 provided with the above-described various parts mounted thereon, thereby completing the assembly of the door.

Hereinafter, a door of a washing machine in accordance with another embodiment of the present disclosure and an assembling structure and assembling method thereof will be described.

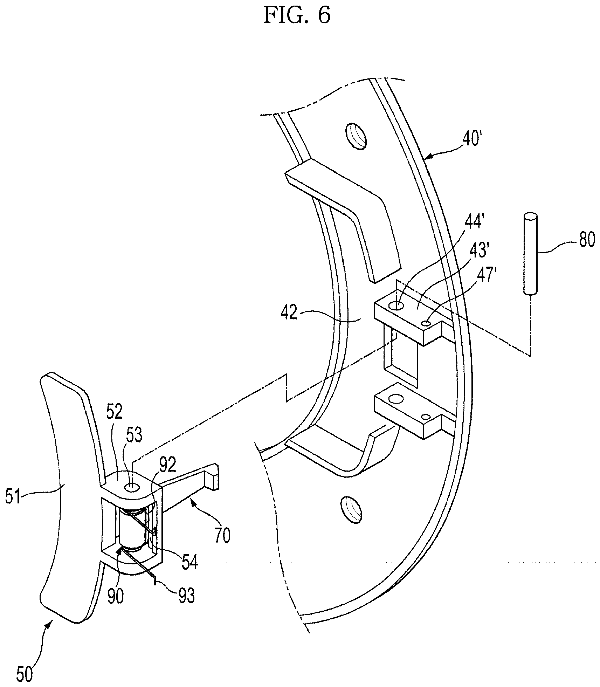

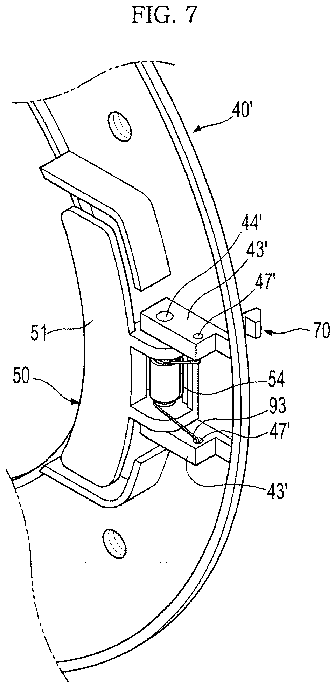

FIG. 6 is a view illustrating an assembling operation of a door handle and a door opening and closing device of the door of the washing machine in accordance with another embodiment of the present disclosure, and FIG. 7 is an assembled perspective view of an essential portion of the door in accordance with the embodiment of the present disclosure.

The following embodiment may have the same configuration as that of the former embodiment except for the structure of a rear panel.

Hereinafter, elements in this embodiment, which may be substantially the same as those in the former embodiment, are denoted by the same reference numerals even though they are depicted in different drawings, and a detailed description thereof will thus be omitted. Therefore, only those elements in the following embodiment that are different from those in the former embodiment will be described.

The door 20 in accordance with this embodiment, as shown in FIG. 6, includes a front panel 30 forming the external appearance of the front surface of the door 20, a rear panel 40' connected with the front panel 30, a door handle 50 provided at the other side end of the door 20 opposite to a hinge member 13 of the door 20 to facilitate the opening and closing of the door 20, and a door opening and closing device to lock the door 20 with the main body 10 and release the locking of the door 20 with the main body 10 in connection with the operation of the door handle 50.

A mounting part 42 to mount the door handle 50 is provided on the rear panel 40'.

A pair of support parts 43' to rotatably support the door handle 50 is provided on the mounting part 42, and a first pin hole 44', into which a pin member 80 is inserted, is formed through each of the support parts 43'.

The door opening and closing device includes a hook member 70 operated in connection with the operation of the door handle 50, the pin member 80 to rotatably mount the hook member 70 and the door handle 50 on the rear panel 40', and an elastic member 90 to return the hook member 70 and the door handle 50 to their original positions when the force applied to the door handle 50 is removed.

A connection part 92 of the elastic member 90 is fixed to a first fixing part 54 of the door handle 50 in the same manner as the former embodiment.

Free terminals 93 of the elastic member 90 are fixed to the rear panel 40'. Second fixing parts 47', which are respectively formed integrally with the support parts 43' to fix the free terminals 93, are formed on the rear panel 40', and the free terminals 93 of the elastic member 90 are fixed to the second fixing parts 47'.

Here, although this embodiment illustrates that the support parts 43' and the second fixing parts 47' are formed integrally, second fixing parts may be respectively provided on the rear panel 40' at positions separated from the support parts 43'.

Although the second fixing parts 47' are illustrated as formed in the shape of a hole, the second fixing parts 47' may alternatively be formed in a loop or clasp shape, in the same manner as the former embodiment.

Further, although this embodiment omits a holder member, the holder member may be provided in the same manner as the former embodiment.

After the free terminals 93 of the elastic member 90 are fixed to the second fixing parts 47', as described above, the front panel 30 is assembled with the rear panel 40'. Therefore, in this embodiment, both sides of the elastic member 90 are fixed prior to the assembly of the front panel 30 and the rear panel 40', and then the front panel 30 is assembled with the rear panel 40', thereby preventing mis-assembly between the elastic member 90 and the front panel 30 and shortening an assembly time, compared with the conventional method that one end of an elastic member is fixed to the rear surface of a front panel by pressure when the front panel is assembled with a rear panel, and thus being capable of improving productivity and reducing production costs.

As is apparent from the above description, in the door of the washing machine and the assembling structure and assembling method thereof in accordance with the present disclosure, the elastic member of the door opening and closing device is fixed prior to the assembly of the front panel and the rear panel, and thus the assembly efficiency of the door is improved.

## Claims

1. A door (20) of a washing machine comprising:
a front panel (30) forming a front surface of the door (20);
a rear panel (40) forming a rear surface of the door (20)
the front and rear panels having a ring shape with an orifice and are connected to each other;
a door handle (50) mounted on the rear panel (40) and rotatably provided between the front panel (30) and the rear panel (40) to be gripped by a user so as not to be exposed from an inner circumferential surface of the door;
a hook member (70) operated in connection with an operation of the door handle (50);
and an elastic member (90) **characterized in that** the door further comprises two fixing parts (47, 47') provided on the rear panel (40, 40'), and the elastic member (90) is provided with one side (93) fixed to the fixing parts (47) and the other side (92) fixed to the door handle (50) to provide elastic force to the hook member (70) and the door handle (50) to return both to their original positions when force applied by the user is removed.

2. The door according to claim 1, wherein:
the rear panel (40) includes a holder member (45) to receive the door handle (50); and the fixing parts (47) are provided on the holder member (45).

3. The door according to claim 2, wherein the holder member (45) is formed integrally with the rear panel (40).

4. The door according to claim 1, further comprising a pin member (80) to connect the door handle (50) and the hook member (70),
wherein the rear panel includes a pair of support parts (43, 43') to support the pin member (80).

5. The door according to claim 4, wherein each support part (43, 43') comprises one of the fixing parts (47, 47').

6. The door according to claim 1, further comprising:
a rotational center part (71) formed at an end of the hook member (70) opposite an end where a hook (73) of the hook member is located;
a pin member (80) to connect the door handle (50) and the hook member, wherein the rear panel (40, 40') includes two support parts (43, 43') to support the door handle; and
a pair of coil parts (91) formed in the elastic member (90), wherein the pin member (80) passes through each of the rotational center part (71), the support parts (43, 43') and the pair of coil parts (91).

7. The door according to claim 6, wherein the elastic member (90) comprises a connection part (92) formed at the inner parts of the coil parts (91) to connect the coil parts (91), and a pair of free terminals (93) formed at the outer ends of the coil parts (91) and protruding from the coil parts (91), wherein the connection part (92) as the other side is fixed to a fixing part (54) of the door handle (50), the rotational center part (71) is located in the space between the coil parts (91), and the free terminals (93) as the one side are fixed to the fixing parts (47).

## Patentansprüche

1. Waschmaschinentür (20), welche aufweist:
eine Vorderwand (30), welche eine Vorderseite der Tür (20) bildet;
eine Rückwand (40), welche eine Rückseite der Tür (20) bildet;
Vorder- und Rückwand eine Ringform mit einer Öffnung aufweisen und miteinander verbunden sind;
einen Türgriff (50), welcher an der Rückwand (40) montiert ist und drehbar zwischen Vorderwand (30) und Rückwand (40) zum Ergreifen durch einen Benutzer so drehbar angeordnet ist, dass er an einer inneren Umfangsfläche der Tür nicht freiliegt;
ein Hakenbauteil (70), welches in Verbindung mit einer Tätigkeit des Türgriffs (50) betätigt wird;
und ein elastisches Bauteil (90), **dadurch gekennzeichnet, dass** die Tür weiterhin zwei Fixierteile (47, 47') aufweist, die auf der Rückwand (40, 40') vorgesehen sind, und das elastische Bauteil (90) mit einer Seite (93) an den Fixierteilen (47) befestigt ist und mit der anderen Seite (92) am Türgriff (50) befestigt ist, um eine elastische Kraft auf das Hakenbauteil (70) und den Türgriff (50) auszuüben, wodurch beide in ihre Ausgangspositionen zurückkehren, wenn die durch den Benutzer ausgeübte Kraft entfernt ist.

2. Tür nach Anspruch 1, wobei die Rückwand (40) ein Halterbauteil (45) zur Aufnahme des Türgriffs (50) aufweist und die Fixierteile (47) an dem Halterbauteil (45) vorgesehen sind.

3. Tür nach Anspruch 2, wobei das Halterbauteil (45) einteilig mit der Rückwand (40) gebildet ist.

4. Tür nach Anspruch 1, welche weiterhin ein Stiftbauteil (80) zur Verbindung von Türgriff (50) und Hakenbauteil (70) aufweist, wobei die Rückwand ein Paar von Stützteilen (43, 43') zur Halterung des Stiftbauteils (80) aufweist.

5. Tür nach Anspruch 4, wobei jedes Stützteil (43, 43') eines der Fixierteile (47, 47') aufweist.

6. Tür nach Anspruch 1, welche weiterhin aufweist:
ein Drehzentrumsteil (41), gebildet an einem Ende des Hakenbauteils (70) gegenüberliegend zu einem Ende, an dem ein Haken (73) am Hakenbauteil angeordnet ist;
ein Stiftbauteil (80) zur Verbindung des Türgriffs (50) und des Hakenbauteils, wobei die Rückwand (40, 40') zwei Tragteile (43, 43') zum Lagern des Türgriffs aufweist, und ein Paar von Wicklungsteilen (91), gebildet in dem elastischen Bauteil (90), wobei das Stiftbauteil (80) durch jedes von Drehmittelpunktsteil (41), Tragteilen (43, 43') und dem Wicklungsteilepaar (91) hindurchtritt.

7. Tür nach Anspruch 6, wobei das elastische Bauteil (90) ein Verbindungsteil (92) aufweist, welches an inneren Teilen der Wicklungsteile (91) zur Verbindung der Wicklungsteile (91) gebildet ist und ein Paar von freien Enden (93) an den äußeren Enden der Wicklungsteile (91) gebildet sind und von den Wicklungsteilen (91) vorstehen, wobei der Verbindungsteil (92) als andere Seite mit einem Fixierteil (54) des Türgriffs (50) befestigt ist, wobei weiterhin der Rotationsmittelteil (71) in dem Raum zwischen den Wicklungsteilen (91) angeordnet ist und die freien Enden (93) als die eine Seite mit den Fixierteilen (47) befestigt sind.

## Revendications

1. Porte (20) de machine à laver comprenant:
un panneau avant (30) formant une surface avant de la porte (20);
un panneau arrière (40) formant une surface arrière de la porte (20);
les panneaux avant et arrière ayant une forme annulaire avec un orifice et sont reliés l'un à l'autre;
une poignée de porte (50) montée sur le panneau arrière (40) et prévue de manière rotative entre le panneau avant (30) et le panneau arrière (40) pour être saisie par un utilisateur de manière à ne pas être exposée à une surface circonférentielle intérieure de la porte;
un élément de crochet (70) actionné en liaison avec un actionnement de la poignée de porte (50); et un élément élastique (90) **caractérisé en ce que** la porte comprend en outre deux pièces de fixation (47, 47') prévues sur le panneau arrière (40, 40'), et la pièce élastique (90) est pourvue d'un côté (93) fixé aux pièces de fixation (47) et de l'autre côté (92) fixé à la poignée de porte (50) pour appliquer une force élastique à l'élément de crochet (70) et à la poignée de porte (50) pour les ramener tous deux à la position initiale lorsque la force appliquée par l'utilisateur cesse.

2. Porte selon la revendication 1, dans laquelle:
le panneau arrière (40) comprend un élément de retenue (45) pour loger la poignée de porte (50); et les pièces de fixation (47) sont prévues sur l'élément de retenue (45).

3. Porte selon la revendication 2, dans laquelle l'élément de retenue (45) est formé d'un seul tenant avec le panneau arrière (40).

4. Porte selon la revendication 1, comprenant en outre un élément de broche (80) pour connecter la poignée de porte (50) et l'élément de crochet (70),
dans lequel le panneau arrière comprend une paire de pièces de support (43, 43') pour prendre en charge l'élément de broche (80).

5. Porte selon la revendication 4, dans lequel chaque pièce de support (43, 43') comprend l'une des pièces de fixation (47, 47').

6. Porte selon la revendication 1, comprenant en outre:
une pièce centrale rotative (71) formée à une extrémité de l'élément de crochet (70) opposée à une extrémité où est situé un crochet (73) de l'élément de crochet;
un élément de broche (80) pour relier la poignée de porte (50) et l'élément de crochet, le panneau arrière (40, 40') comprend deux pièces de support (43, 43') pour prendre en charge la poignée de porte; et une paire de pièces de bobine (91) formées dans l'élément élastique (90),
dans lequel l'élément de broche (80) traverse chacune de la partie centrale rotative (71), les pièces de support (43, 43') et la paire de pièces de bobine (91).

7. Porte selon la revendication 6, dans laquelle l'élément élastique (90) comprend une pièce de connexion (92) formée au niveau des parties intérieures des pièces de bobine (91) pour connecter les pièces de bobine (91), et une paire de terminaisons libres (93) formées aux extrémités extérieures des pièces de bobine (91) et faisant saillie à partir des pièces de bobine (91), la pièce de connexion (92) étant fixée à l'autre côté à une pièce de fixation (54) de la poignée de porte (50), la pièce centrale de rotation (71) est située dans l'espace entre les pièces de bobine (91), et les terminaisons libres (93) formant un même côté sont fixées aux pièces de fixation (47).
